# EUROPEAN PATENT APPLICATION

(11) **EP 4 447 389 A1**
(43) Date of publication of application: **16.10.2024**
(21) Application number: 22903154.7
(22) Date of filing: 17.11.2022
(51) Int. Cl.: H04L 12/40, H02J 7/00, H02J 1/06

(54) **MULTI-MASTER POWER SUPPLY AND COMMUNICATION SYSTEM, METHOD AND DEVICE**

(30) Priority: 10.12.2021 CN 202111513927
(71) Applicant: Shu, JiFeng, Chengdu, Sichuan 611130 (CN)
(72) Inventor: Shu, JiFeng, Chengdu, Sichuan 611130 (CN)
(74) Representative: Zaboliene, Reda
(86) International application number: PCT/CN2022/132430
(87) International publication number: WO 2023/103731

(57) **Abstract**

The present invention discloses a multi-master power supply communication system, method and device. The system includes a power supply module and at least one functional module, where the power supply module and the at least one functional module are interconnected through a bus, the power supply module sends charging data to the functional module through the bus, and the functional module receives the charging data through the bus and executes a charging action; the power supply module executes a first sending action through the bus and sends communication data to the at least one functional module; and the functional module executes a second sending action through the bus and sends communication data to the power supply module or another functional module. According to the present invention, the functional module is charged through the power supply module before and during communication of the functional module by using a bus connecting the power supply module and the functional module, in order to achieve multi-master power supply communication between multiple functional modules using two power lines, thus solving the technical problems of a lack of a streamlined multi-master power supply communication system and a weak driving capability in the current bus communication mode.

## Description

### FIELD OF TECHNOLOGY

The present invention relates to the technical field of communication, and in particular to a multi-master power supply communication system, method and device.

### BACKGROUND

A power supply bus is a kind of buses that can communicate and supply power simultaneously, and it is the bus with the least physical communication lines (only two power lines). Common ones include 1-wire, mbus, and powerbus.

Due to the pull-up resistor of 1-wire, if the output current needs to be increased, it is necessary to reduce this resistor, but at the same time, unnecessary communication power consumption is increased. Moreover, this resistor is connected in series to the communication trunk, and the current flowing through it is equivalent to the consumption current of the slave. If the slave has a high current load such as a motor, this resistor consumes a lot of power. Therefore, it is generally suitable for low current power supply occasions.

Mbus adopts a dual-voltage identification logic level, but its bus power supply capability and transmission distance are weaker than those of powerbus.

Powerbus is an advanced bus, and its master station can provide a maximum current of 20 A. However, it does not support multi-host communication, and adopts a master-slave communication mode, which leads to low overall communication efficiency of the bus, heavy host tasks, and a power supply current of the slave station of generally lower than 1 A (the diode of the slave station is one of the main reasons for current limitation). This appears to be too small for the control of power devices such as motors. Under powerbus is a voltage, and above it is a current. Due to the need for current detection, this inevitably leads to the complexity of the master station circuit. Therefore, how to provide a multi-master power supply communication with a strong driving capability is a technical problem that needs to be solved urgently.

The above content is only used to assist in understanding the technical solution of the present invention and does not mean that the above content is recognized as prior art.

### SUMMARY

The main purpose of the present invention is to provide a multi-master power supply communication system, method and device, aiming to solve the technical problems of a lack of a streamlined multi-master power supply communication system and a weak driving capability in the current bus communication mode.

To achieve the above purpose, the present invention provides a multi-master power supply communication system, which includes a power supply module and at least one functional module, where the power supply module and the at least one functional module are interconnected through a bus, where
the power supply module sends charging data to the functional module through the bus, and the functional module receives the charging data through the bus and executes a charging action;
the power supply module executes a first sending action through the bus and sends communication data to the at least one functional module; and the functional module executes a second sending action through the bus and sends communication data to the power supply module or another functional module.

In addition, to achieve the above purpose, the present invention further provides a multi-master power supply communication method for the power supply module of the multi-master power supply communication system as described above, which includes the following steps:
sending the charging data to the bus to charge the at least one functional module when the power supply module is detected to be powered on or the bus is detected to have no communication data; and
sending the charging data to the bus in a preset period of communication data transmission to charge the functional module if the communication data are detected to be transmitted by the bus.

In addition, to achieve the above purpose, the present invention further provides a multi-master power supply communication method for the power supply module or functional module of the multi-master power supply communication system as described above, which includes the following steps:
sending first communication data corresponding to a first communication sending instruction to the bus when the first communication sending instruction is received;
determining whether a priority corresponding to second communication data is higher than a priority of the first communication data if the second communication data are detected to be transmitted by the bus;
executing a sending waiting action until second communication data transmission is completed, and returning to execute the step of sending first communication data corresponding to a communication sending instruction to the bus if the priority corresponding to the second communication data is higher than the priority of the first communication data; and
determining whether the second communication data transmission is completed, releasing the bus if the second communication data transmission is completed, and sending a response request to the functional module corresponding to the second communication data received if no contention is detected, so that the functional module sends response data to the bus according to the response request.

In addition, to achieve the above purpose, the present invention further provides a multi-master power supply communication device, which includes:
a power supply module including a memory, a processor, and a multi-master power supply communication program stored on the memory and operable on the processor, where the multi-master power supply communication program implements the steps of the multi-master power supply communication method as described above when executed by the processor; and
a functional module including a memory, a processor, and a multi-master power supply communication program stored on the memory and operable on the processor, where the multi-master power supply communication program implements the steps of the multi-master power supply communication method as described above when executed by the processor.

According to the present invention, the functional module is charged through the power supply module before and during communication of the functional module by using a bus connecting the power supply module and the functional module, in order to achieve multi-master power supply communication between multiple functional modules using two power lines, thus solving the technical problems of a lack of a streamlined multi-master power supply communication system and a weak driving capability in the current bus communication mode.

### BRIEF DESCRIPTION OF THE DRAWINGS

FIG. 1 is a schematic diagram of a structure of a schematic diagram of a structure of a multi-master power supply communication system according to an embodiment of the present invention;
FIG. 2 is a schematic diagram of a circuit principle of a power supply module according to an embodiment of the present invention;
FIG. 3 is a schematic diagram of a circuit principle of a functional module according to an embodiment of the present invention;
FIG. 4 is a schematic diagram of a working state of a power supply module according to an embodiment of the present invention;
FIG. 5 is a schematic diagram of a working state of a functional module according to an embodiment of the present invention;
FIG. 6 is a schematic flow diagram of a first embodiment of a multi-master power supply communication method according to the present invention;
FIG. 7 is a schematic diagram of a logic level in which charging data are a power supply bit according to an embodiment of the present invention;
FIG. 8 is a schematic diagram of a logic level in which charging data are a power supplementing bit according to an embodiment of the present invention;
FIG. 9 is a schematic diagram of a logic level of a power supplementing bit according to an embodiment of the present invention;
FIG. 10 is a schematic diagram of an insertion position of an anti-misidentification level according to an embodiment of the present invention;
FIG. 11 is a schematic flow diagram of a second embodiment of a multi-master power supply communication method according to the present invention;
FIG. 12 is a schematic diagram of a frame data structure of communication data according to an embodiment of the present invention;
FIG. 13 is a schematic diagram of a node sending data during an interval according to an embodiment of the present invention;
FIG. 14 is a schematic diagram of a node sending data during a power supply bit according to an embodiment of the present invention;
FIG. 15 is a schematic diagram of contention arbitration in which a node receives a start bit but does not receive a synchronization bit according to an embodiment of the present invention;
FIG. 16 is a schematic diagram of contention arbitration in which a node receives a start bit but does not receive a data bit according to an embodiment of the present invention;
FIG. 17 is a schematic diagram of contention arbitration in which a first node receives a start bit and the first node fails to contend according to an embodiment of the present invention;
FIG. 18 is a schematic diagram of contention arbitration in which a first node receives a start bit and a second node fails to contend according to an embodiment of the present invention;
FIG. 19 is a schematic diagram of contention arbitration in which data has been received and a priority level is high according to an embodiment of the present invention;
FIG. 20 is a schematic diagram of contention arbitration in which data has been received and a priority level is low according to an embodiment of the present invention;
FIG. 21 is a schematic diagram of contention arbitration in which data has been received and a priority level is the same according to an embodiment of the present invention;
FIG. 22 is a schematic diagram of improving a driving capability of a functional module according to an embodiment of the present invention;
FIG. 23 is a schematic diagram of synchronization of multiple functional modules according to an embodiment of the present invention; and
FIG. 24 is a schematic diagram of a situation in contention arbitration according to an embodiment of the present invention.

The purpose realization, functional features, and advantages of the present invention will be further explained in conjunction with embodiments, with reference to the accompanying drawings.

### DESCRIPTION OF THE EMBODIMENTS

It should be understood that the specific embodiments described herein are merely intended to explain the present invention and are not intended to limit the present invention.

A power supply bus is a kind of buses that can communicate and supply power simultaneously, and it is the bus with the least physical communication lines (only two power lines). Common ones include 1-wire, mbus, and powerbus.

Due to the pull-up resistor of 1-wire, if the output current needs to be increased, it is necessary to reduce this resistor, but at the same time, unnecessary communication power consumption is increased. Moreover, this resistor is connected in series to the communication trunk, and the current flowing through it is equivalent to the consumption current of the slave. If the slave has a high current load such as a motor, this resistor consumes a lot of power. Therefore, it is generally suitable for low current power supply occasions.

Mbus adopts a dual-voltage identification logic level, but its bus power supply capability and transmission distance are weaker than those of powerbus.

Powerbus is an advanced bus, and its master station can provide a maximum current of 20 A. However, it does not support multi-host communication, and adopts a master-slave communication mode, which leads to low overall communication efficiency of the bus, heavy host tasks, and a power supply current of the slave station of generally lower than 1 A (the diode of the slave station is one of the main reasons for current limitation). This appears to be too small for the control of power devices such as motors. Under powerbus is a voltage, and above it is a current. Due to the need for current detection, this inevitably leads to the complexity of the master station circuit. Therefore, how to provide a multi-master power supply communication with a strong driving capability is a technical problem that needs to be solved urgently.

In order to solve this problem, various embodiments of the multi-master power supply communication system of the present invention are proposed. The multi-master power supply communication system provided by the present invention charges the functional module through the power supply module before and during communication of the functional module by using a bus connecting the power supply module and the functional module, in order to achieve multi-master power supply communication between multiple functional modules using two power lines, thus solving the technical problems of a lack of a streamlined multi-master power supply communication system and a weak driving capability in the current bus communication mode.

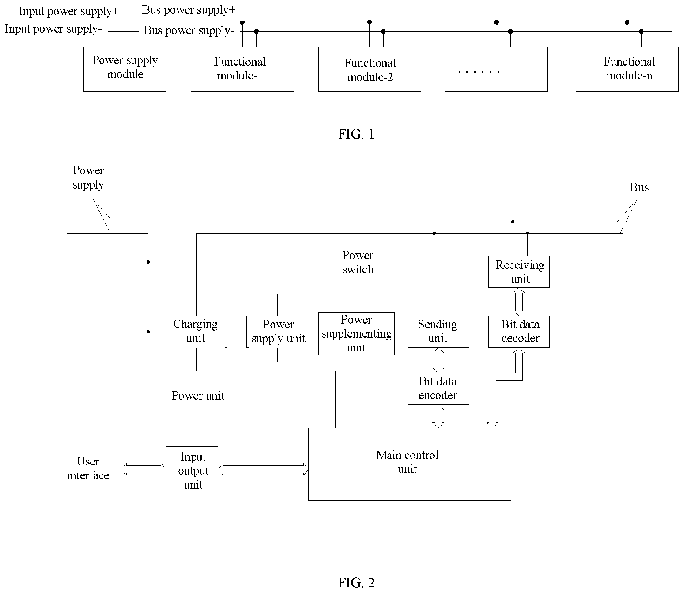

Referring to FIG. 1, FIG. 1 is a schematic diagram of a structure of an embodiment of a multi-master power supply communication system according to the present invention.

In this embodiment, the multi-master power supply communication system includes a power supply module and at least one functional module, where the power supply module and the at least one functional module are interconnected through a bus, where the power supply module sends charging data to the functional module through the bus, and the functional module receives the charging data through the bus and executes a charging action; the power supply module executes a first sending action through the bus and sends communication data to the at least one functional module; and the functional module executes a second sending action through the bus and sends communication data to the power supply module or another functional module.

It is easy to understand that this embodiment includes one power supply module communicating with multiple functional modules through power lines. The power supply module provides electric energy for each functional module, each functional module performs its own function, and intercommunication may occur between the functional modules and between the functional modules and the power supply module.

Specifically, the power supply module includes a power supply main control unit, a charging unit, a power supply unit, a power supplementing unit, and a first power switch, where the charging unit is configured to transmit first charging data to the bus; the power supply main control unit is configured to control the power supply unit and the power supplementing unit each to send charging data to the bus; and the first power switch is connected to the power supply unit and the power supplementing unit for transmitting second charging data and third charging data to the bus.

Furthermore, the power supply module further includes a first sending module and a first receiving module, where the first sending module includes a first sending unit and a first bit data encoder, the first bit data encoder is configured to encode a logic data bit and a charging data bit into communication data, and the first sending unit is configured to send the communication data to the first power switch, so that the first power switch sends the communication data to the bus; and the first receiving module includes a first receiving unit and a first bit data decoder, the first receiving unit is configured to receive the communication data on the bus, and the first bit data decoder is configured to decode the communication data into the logic data bit and the charging data bit.

In some embodiments, as shown in FIG. 2, FIG. 2 is a schematic diagram of a circuit principle of a power supply module. In this embodiment, the power supply module includes:
a charging unit configured to charge each functional module of the bus in a constant current, where after the power supply module is powered on, a main control unit works to enable the charging unit, the charging unit charges an energy storage capacitor of each functional module of the bus in a constant current until it is fully charged, and then the main control unit disables this unit;
a power supply unit configured to supply power to each functional module on the bus, where after the charging unit is completed, the main control unit enables this unit, the main control unit detects bus communication and disables this unit, and the main control unit detects the end of the bus communication and enables this unit;
a power supplementing unit configured to provide electric energy by the power supply module for each functional module connected to the bus during communication, where when the functional module sends data to the bus, the power supply module will provide a power supplementing pulse for the bus, and when the power supply module sends data to the bus, the power supply module will not provide the power supplementing pulse for the bus, because a data signal itself contains a power supplementing bit, and it can supplement power to each functional module;
a sending unit configured to send data to the bus, where when the main control unit receives data to be sent from a user input/output unit by a user, the sending unit is enabled to send the data to the bus, and when the main control unit detects that the bus fails to contend, the current data are stopped from being sent, and at the same time, the power supplementing unit is enabled to supplement power to the bus; and after data sending is finished, the sending unit is restarted to continuously send data to the bus, and after sending is finished, a corresponding flag bit of a sending end is set for the user to use;
a receiving unit configured to receive bus data, where the power supply module is monitoring the bus data all the time, and when data associated with the module is received, a corresponding receiving flag bit is set for the user to use; and it should be noted that a receiving module does not affect the power supply module to provide constant current charging, power supply, and power supplementing to the bus;
an input/output unit configured to exchange data with the user, where it has corresponding flag bits, such as a reception success flag bit, a sending success flag bit, and a reception/sending buffer flag: empty, half empty, full, etc.; and an interrupt pins, a data bus pin, a control pin, etc. are provided to the user after reception/sending is completed;
a power unit configured to provide electric energy for each unit in the power supply module;
a power switch configured to provide various types of pulses for the bus, where the power switch is directly controlled by the power supply unit, the power supplementing unit, and the sending unit to provide various types of pulse data to the bus; and
a power supply main control unit configured to control the power supply module, where within the power supply main control unit has a clock generator, a sequential control circuit, a bus level pulse width counter, a data encoder, a data decoder, a priority identification, etc.

It is easy to understand that the charging unit, the power supply unit, and the power supplementing unit are used to perform a charging action at different time periods.

Specifically, the functional module includes a functional main control unit, a second sending module, a second receiving module, and a second power switch, where the functional main control unit is configured to control the second sending module to execute a sending action and control the second receiving module to execute a receiving action; the second sending module includes a second sending unit and a second bit data encoder, the second bit data encoder is configured to encode a logic data bit and a charging data bit into communication data, and the second sending unit is configured to send the communication data to the second power switch, so that the second power switch sends the communication data to the bus; and the second receiving module includes a second receiving unit and a second bit data decoder, the second receiving unit is configured to receive the communication data on the bus, and the second bit data decoder is configured to decode the communication data into the logic data bit and the charging data bit.

Furthermore, the functional module further includes a power supply branch and an energy storage capacitor, where the power supply branch is configured to receive the charging data and charge the energy storage capacitor; and the energy storage capacitor is connected to the power supply branch and stores electric energy corresponding to the charging data received by the power supply branch.

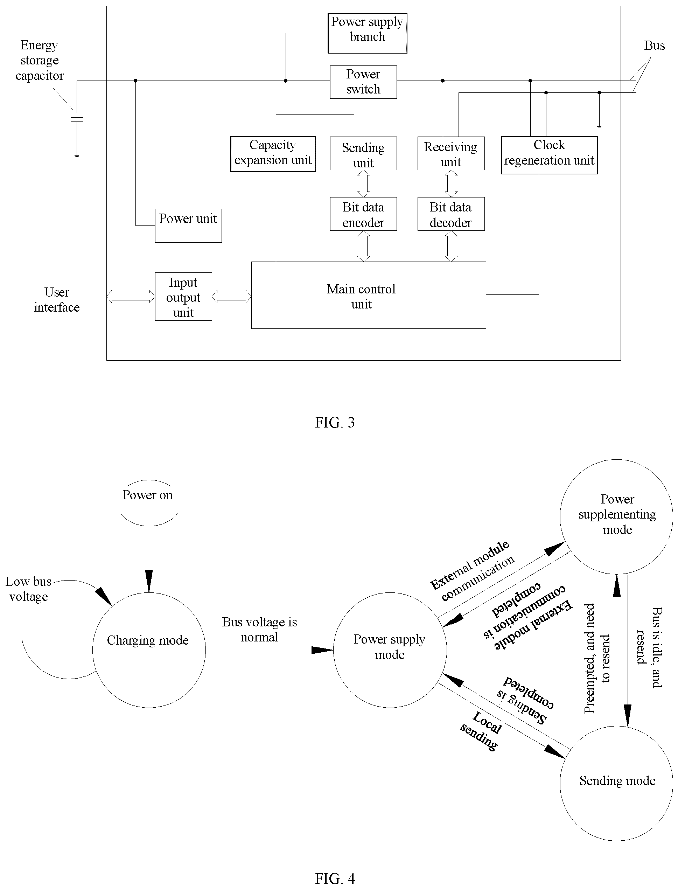

In some embodiments, as shown in FIG. 3, FIG. 3 is a schematic diagram of a circuit principle of a functional module. In this embodiment, the functional module includes:
a power supply branch configured to provide a power supply circuit when the functional module is powered on, where a bus voltage is charged to the energy storage capacitor through the power supply branch; when connecting to the bus for the first time, each functional unit does not work because this module is out of power, and this power supply branch is the only power supply branch that can obtain electric energy from the bus; and the power supply branch must be unidirectional, so it is generally a diode;
a power switch configured to provide various types of pulses to the bus, where the power switch is controlled by a capacity expansion unit, and the power switch is turned on in a specific time period, which greatly reduces the on-resistance of the power supply branch and thus improves the load power of the functional module; the specific time period includes: a supplementing bit time period encoded by the communication data, a power supply pulse, and the start pulse; the power switch is also controlled by the sending unit to provide various types of pulse data to the bus; and the power switch generally use an MOS transistor, which have much lower internal resistance than diodes;
an energy storage capacitor is configured to store electric energy on the bus for use by the functional module and loads;
a sending unit configured to send data to the bus, where when the main control unit receives data to be sent from a user input/output unit by a user, the sending unit is enabled to send the data to the bus, and when the main control unit detects that the bus fails to contend, the current data are stopped from being sent, and the bus is released; and after bus data sending is finished, the sending unit is restarted to continuously send data to the bus, and after sending is finished, a corresponding flag bit of a sending end is set for the user to inquire;
a receiving unit configured to receive bus data, where the functional module is monitoring the bus data all the time, and when data associated with the module is received, a corresponding receiving flag bit is set for the user to inquire; and
a bit data encoder and a bit data decoder, where generally, under a positive logic system, logic 0 is represented by a low level and logic 1 is represented by a high level, in a communication process, if the power supply module outputs more logic 1 in output data to the functional module, it can provide power to the functional module, and if the power supply module outputs more logic 0, or even all logic 0, the functional module may lose power and cause the entire system to breakdown; and therefore, M-BUS, PowerBUS and other power supply buses usually use dual power supply, a high voltage on the bus represents logic 1 and a low voltage represents logic 0, this low voltage is generally set to about 10 V to ensure the normal operation of the functional module;
however, when the functional module communicates with the functional module, M-BUS and PowerBUS cannot supply them with power, so they can only adopt a master-slave mode; only the power supply module can send a signal to the functional module, and then the functional module responds to the power supply module in a short period of time in a current manner; a bit data encoding format proposed by a bit data encoding/decoding unit of this embodiment is: logic bit + power supplementing bit, where the logic bit is divided into two types: for the sending module, a low level is output when data are 0, and a high level is output when data are 1; for a non-sending module, the bus is released; and it should be noted that the sending module may be a power supply module or a functional module; there are two types of the power supplementing bit: for the power supply module, it always outputs a high level; for the functional module, it will turn on a power switch tube at this time, which is beneficial for the power supply module to supply power to the functional module and improve the load capacity of the functional module;
this embodiment benefits from the superiority of this coding, and in various communication situations, i.e. data communication from the power supply module to the functional module, from the functional module to the power supply module, and from the functional module to the functional module, and even if the communication data are all logic 0, it doesn't matter, and the power supply module can always supplement power to each functional module in a timely manner;
the main characteristic data of this embodiment, i.e. power supply bit, start bit, three kinds of response bits, logic 0, and logic 1, can all be decomposed into the above formats, where the main difference between the power supply bit, the start bit and the data bit (including several bits of logic 0 or logic 1, but the number of consecutive logic 1 cannot exceed 6) is that the pulse width is different, the start bit is wider than the power supply bit, and the power supply bit is wider than the data bit;
in addition, compared with the communication mode when the bus is idle adopted by M-BUS and PowerBUS, this embodiment adopts real-time communication, which has better communication flexibility;
a capacity expansion unit configured to reduce the impedance of the power supply circuit and improve the load capacity of the functional module, which enables the power switch to be turned on at a specific time;
a power unit configured to provide electric energy for each unit in the power supply module;
an input/output unit configured to exchange data with the user, where it has corresponding flag bits, such as a reception success flag bit, a sending success flag bit, and a reception/sending buffer flag: empty, half empty, full, etc.; and an interrupt pins, a data bus pin, a control pin, etc. are provided to the user after reception/sending is completed;
a clock regeneration unit configured to obtain a clock signals from a bus signal, where due to multi-master communication, each module has its own clock, and if clocks are in different frequencies and in phase, it will cause chaos in the entire system; generally, a clock of the power supply module is used as a reference, and each functional module can obtain a unique data waveform of the power supply module from the bus, and separate a clock signal from it as its own clock; the unique data waveform of the power supply module includes a power supply pulse and a frame synchronization signal; and
a functional main control unit configured to control the functional module, where within the power supply main control unit has a clock generator, a sequential control circuit, a bus level pulse width counter, a data encoder, a data decoder, a priority identification, etc.

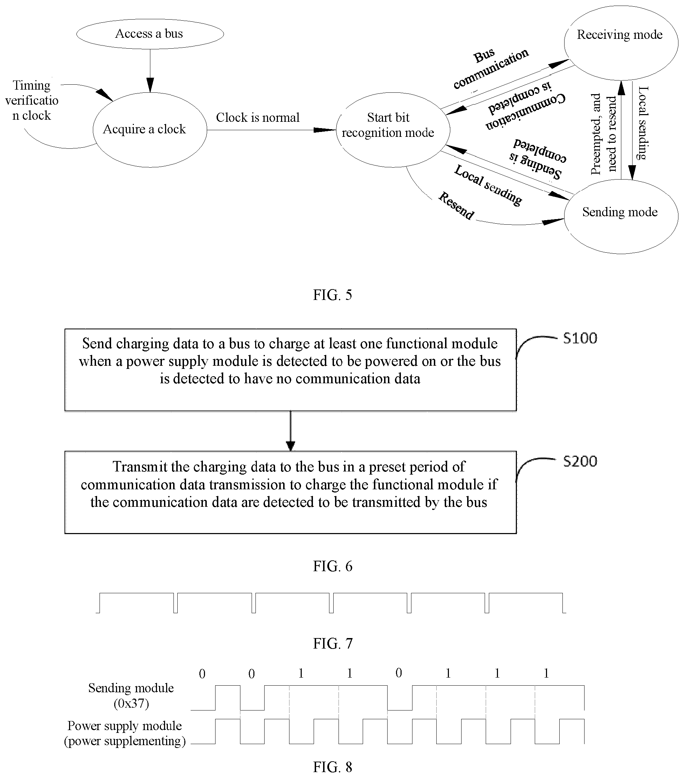

As shown in FIGS. 4 and 5, the principle of multi-master power supply communication in this embodiment is as follows.

When powered on, the power supply module first enters a charging mode. It enables the charging unit to charge each functional module on the bus at a constant current, the main control unit within it detects a bus level, and when the bus level reaches a set value, it indicates that it is fully charged. Then the charging unit is disabled, the power supply unit is enabled, and a power supply mode is entered.

In the power supply mode, the power supply module continuously sends power supply pulses to the bus to continuously provide electric energy to each functional module on the bus. Each functional module is powered normally. In this mode, the internal main control unit simultaneously detects whether this module is to send data and whether there is an external module communicating.

When this module is detected to send data, it will enter a sending mode. If an external module is detected to be communicating at this time, its internal main control unit will make a priority level judgment. If a local priority level is low, data will be stopped from being sent and a power supplementing mode is entered at the same time to provide a power supplementing pulse to the bus. After data transmission of this frame is completed, the power supply module exits the power supplementing mode and the unsent data are resent. After the data sending is completed, the sending mode is exited and the power supply mode is entered. Correspondingly, if a local priority level is high, data continues to be sent until the sending is completed, and then the sending mode is exited and the power supply mode is entered.

If, in the power supply mode, the power supply module only detects that the external module is communicating, it will enter the power supplementing mode to provide the power supplementing pulse to the bus. After bus communication ends, the power supply module will enter the power supply mode.

It is easy to understand that according to this embodiment, the functional module is charged through the power supply module before and during communication of the functional module by using a bus connecting the power supply module and the functional module, in order to achieve multi-master power supply communication between multiple functional modules using two power lines, thus solving the technical problems of a lack of a streamlined multi-master power supply communication system and a weak driving capability in the current bus communication mode.

It can be understood by those skilled in the art that the structures shown in FIGS. 2 and 3 do not constitute limitations on the power supply module and functional module, and may include more or fewer components than shown, or combine certain components, or have different arrangements of components.

An embodiment of the present invention provides a multi-master power supply communication method. Referring to FIG. 6, FIG. 6 is a schematic flow diagram of a first embodiment of a multi-master power supply communication method according to the present invention.

In this embodiment, the multi-master power supply communication method for the power supply module in the multi-master power supply communication system described above, and the multi-master power supply communication method includes the following steps.

Step S100, sending the charging data to the bus to charge the at least one functional module when the power supply module is detected to be powered on or the bus is detected to have no communication data.

Specifically, after the power supply module is powered on, in order to avoid damage to a power switch tube caused by a high bus driving current, multiple functional modules attached to the bus, and a large energy storage capacitor of the functional module, the power supply module charges the bus at a constant current and fully charges the energy storage capacitor of each functional module.

After constant current charging, it is detected whether communication data are transmitted in the bus, and if the communication data are not transmitted in the bus, charging data are sent to the bus to charge the at least one functional module.

The charging data are the level data of the power supply bit + interval transmitted by the power supply module to the functional module, as shown in FIG. 7, that is, on the bus is a pulsating voltage. Considering that the large-capacity capacitor on the node is usually an aluminum electrolytic capacitor with poor frequency characteristics, the power supply bit can be set to a wider high level, which is more conducive to charging it.

Step S200, transmitting the charging data to the bus in a preset period of communication data transmission to charge the functional module if the communication data are detected to be transmitted by the bus.

Specifically, when the functional module transmits data to the bus, the charging data sent by the power supply module to the bus are the level data of the power supplementing bit, as shown in FIG. 8. When the functional module communicates with other nodes, the power supply module provides the power supplementing bit to the bus at this time. If it is not provided, the functional module may make an error due to the energy stored by its energy storage capacitor dissipated completely.

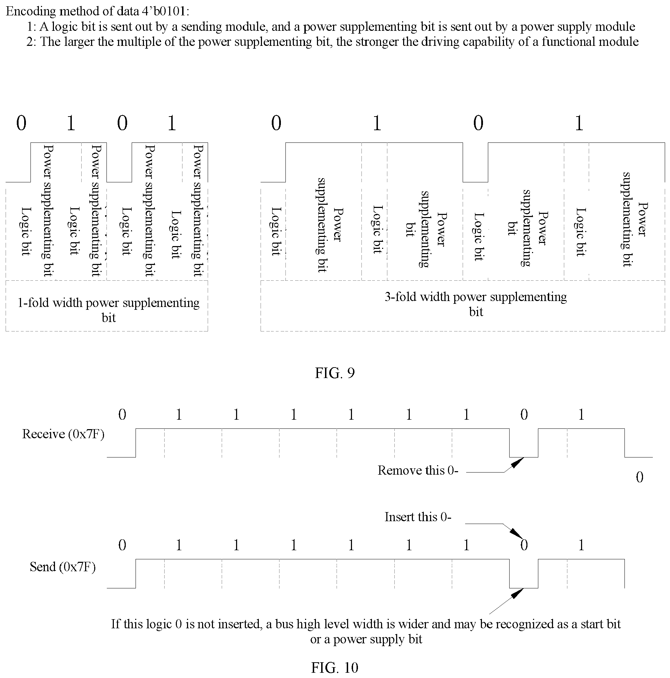

It should be noted that when the functional module sends communication data to the bus, as shown in FIG. 9, the communication data includes at least one logic data bit, the charging data includes at least one charging data bit, and the preset period is after each logic data bit; and the step of sending the charging data to the bus in a preset period of communication data transmission to charge the functional module specifically includes sending the charging data to the bus to charge the functional module after each logic data bit of the communication data, so that when the functional module receives the charging data, the second power switch is turned on to increase an output current of the functional module.

In addition, it should be noted that the functional module inserts one logic 0 after six consecutive logic 1, as shown in FIG. 10, and removes this logic 0 when performing reception. If this logic 0 is not inserted, it will result in a wider width of the bus high level and cause an identification error at the same time.

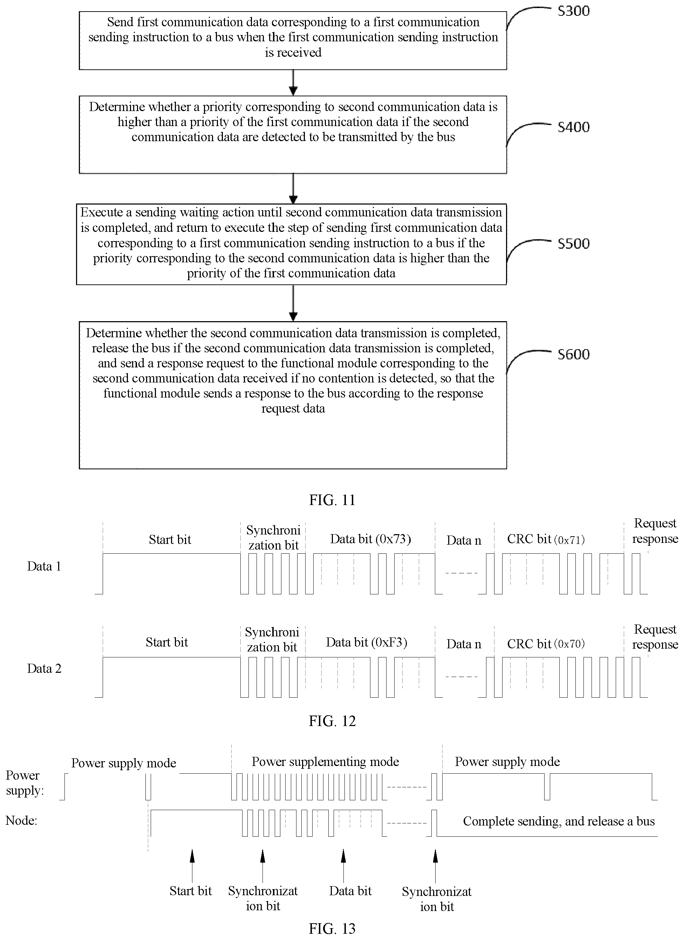

For ease of understanding, referring to FIG. 11, FIG. 11 is a schematic flow diagram of a second embodiment of a multi-master power supply communication method according to the present invention. Based on the first embodiment of the multi-master power supply communication method shown in FIG. 6, this embodiment proposes a second embodiment of the multi-master power supply communication method for the power supply module or functional module of the multi-master power supply communication system, and the multi-master power supply communication method is specifically as follows:
Step S300, sending first communication data corresponding to a first communication sending instruction to the bus when the first communication sending instruction is received.
Step S400, determining whether a priority corresponding to second communication data is higher than a priority of the first communication data if the second communication data are detected to be transmitted by the bus.
Step S500, executing a sending waiting action until second communication data transmission is completed, and returning to execute the step of sending first communication data corresponding to a first communication sending instruction to the bus if the priority corresponding to the second communication data is higher than the priority of the first communication data.
Step S600, determining whether the second communication data transmission is completed, releasing the bus if the second communication data transmission is completed, and sending a response request to the functional module corresponding to the second communication data received if no contention is detected, so that the functional module sends response data to the bus according to the response request.

Specifically, to determine whether the communication data transmission by the bus is completed, a low level (interval) can be inserted after the sending module has sent all the data. If no contention is detected, a receiving response signal mode is entered. The response signal is jointly sent by the power supply module and the receiving module. The power supply module sends a non-responsive bit. If the sending module receives this bit, it indicates that the receiving module is not found or the receiving module is damaged. The receiving module receives and sends a successful response bit; otherwise, it sends a failed response signal.

In this embodiment, compared with the traditional response mode, only success or failure can be distinguished. For the reception failure, it cannot be distinguished whether it is a line problem or the addressed receiver is not connected to the bus. This application has an additional non-responsive bit. If no response is received, it indicates that the addressed receiver is not on the bus. If a failed response bit is received, it indicates that the addressed receiver is on the bus, but the received data are incorrect. Therefore, the response mode provided by this embodiment can more accurately distinguish whether the addressed receiver has been on the bus or had failed reception

Furthermore, in this embodiment, the bus in the multi-master power supply communication system is a broadcast type bus with independent receivers and senders inside, and each module on the bus can monitor the data transmitted on the bus. When the receiver receives the start bit, the module enters a data receiving mode. When there are data to be sent, it immediately enters a sending mode, that is, the sending mode takes priority over the receiving mode. In the sending mode, if there is contention and the contention fails, the resending flag is set and the module enters the receiving mode. After this frame is completed, the data are automatically resent. Before sending the data, the bus is either in an idle state or in a communication state. The sending process of these two states will be explained below.

Furthermore, the frame data structure in which the functional module sends communication data to the bus may be: start bit + synchronization bit + command byte + parameter byte + CRC8 + response bit, as shown in FIG. 12.

When the bus is in the idle state, that is, there is no communication at this time, and only the power supply bit string output by the power supply module is on the bus.

In the first case, as shown in FIG. 13, the node sends data during an "interval". The node is to send data at this time and waits for "interval" completion before starting to send the "start bit".

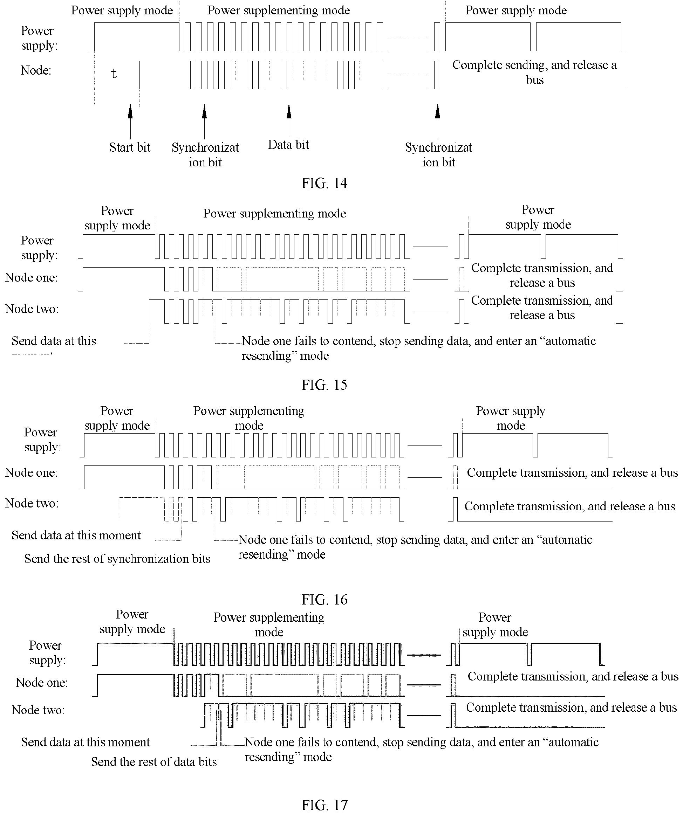

In the second case, as shown in FIG. 14, the node sends data during a "power supply bit". The node is to send data at this time and immediately sends the "start bit" (high level), and previous high level (t) time is to be accumulated.

When the bus is in the communication state.

In the first case, as shown in FIG. 15, the "start bit" is not received, other nodes are sending the "start bit", and the node fails to contend, stops sending data, and enters the "automatic resending mode".

In the second case, as shown in FIG. 16, the "start bit" is received, but the synchronization bit has not yet been received. Other nodes are sending the "synchronization bit", and the node fails to contend, stops sending data, and enters the "automatic resending mode".

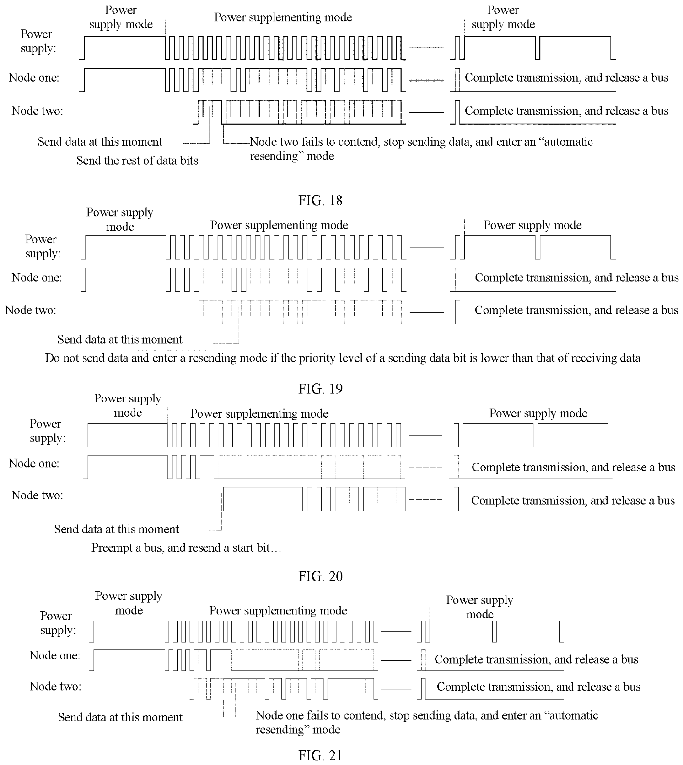

In the third case, as shown in FIG. 17, the "start bit" is received, but any data bit has not yet been received. Other nodes are sending the first data bit, and the first node fails to contend, stops sending data, and enters the "automatic resending mode" to send the rest of data bits. As shown in FIG. 18, the second node fails to contend, stops sending data, and enters the "automatic resending" mode to send the rest of data bits.

In the fourth case, as shown in FIG. 19, if the data has been received and its priority level is high, the sending of the data is stopped, and if the priority level of a sending data bit is lower than that of receiving data, the data are not sent, and the resending mode is entered.

In the fifth case, as shown in FIG. 20, if the data has been received and its priority level is low, the "start bit" is sent to preempt the bus.

In the sixth case, as shown in FIG. 21, if the data has been received and its priority level is the same, the data are continued to be sent, and the node fails to contend, stops sending data, and enters the "automatic resending mode".

In some embodiments, when the functional module sends data to the bus, the highest byte is transmitted first, the lowest byte is transmitted last, the highest bit is transmitted first, and the lowest bit is transmitted last.

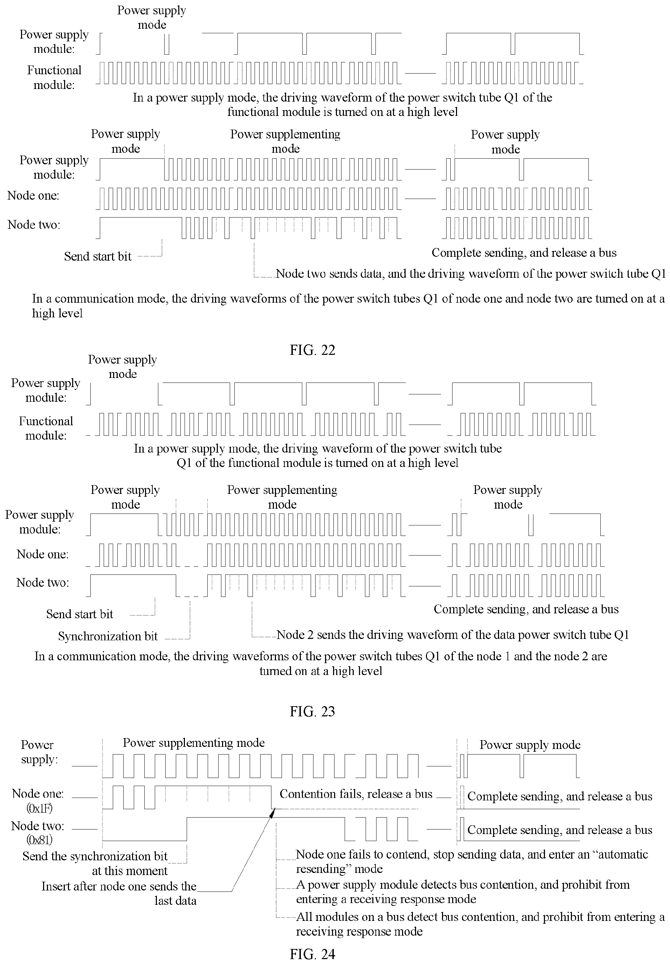

Furthermore, as shown in FIG. 22, in order to improve the driving capability of the functional module, when the bus is at a high power level and the functional module does not send data, Q1 is a power switch, which indicates that the energy storage capacitor can only be charged by a power supply branch D 1. It is precisely this power supply branch that prevents the output current of the functional module from being too high. If Q1 is turned on when the power supplementing bit is encoded by the communication data on the bus, due to the extremely low switching resistance of the field-effect transistor, the output current of the functional module is greatly increased. Meanwhile, this will not affect communication.

In another embodiment, due to the multi-master communication bus, it is uncertain when the overall module sends data, the clock frequency and phase of the data sent by each module cannot be exactly the same, and there is always an error. If these factors are superimposed, communication failure may be caused. As shown in FIG. 23, in order to achieve synchronization between multiple functional modules in multi-master communication, one solution is to prohibit each functional module from turning on its respective power switch Q1 before the first rising edge of the power supply bit of the power supply module arrives, or during the synchronization bit period, so that the rising edge synchronizes the clock phases everywhere and the respective clock frequencies were calculated based on two adjacent rising edge times.

In addition, a reception stop action is executed if a second communication sending instruction is detected when third communication data transmitted by the bus is received; and fourth communication data corresponding to the second communication sending instruction are acquired, and the fourth communication data are transmitted to the bus.

In practical applications, because the bus has preemptive priority transmission, high-priority data transmission can completely preempt low-priority data transmission that is communicating. Due to the line or relationship of the line, logic 1 takes priority over logic 0. In addition, there is also a contention arbitration situation. For example:

As shown in FIG. 24, node one is to send data 0x1F, and the upper 4 bits have been sent. At this time, node two is to send 0x81, which has a higher priority than node one, but the highest bit received is 0, so the data need to be completely resent (if the received data are the same, only the next bit needs to be sent). Therefore, node two starts to send the start bit, and the bus is at a high level. However, since node one also sends high levels later, it does not detect any contention and smoothly enters the receiving response mode, and fails to preempt the bus. In this embodiment, a low level can be inserted before receiving a response. At this time, if the bus is detected to be at a high level, it indicates contention. Then a resending flag is set to enter the receiving mode, and the bus is preempted.

In this embodiment, for high-voltage and super-large current loads on the bus, the power switch tubes Q1 of the power supply module and the functional module must be large, which not only increases the number of power switch tubes, and increases costs, but also increases the power consumption. In some cases, this is not advisable. This embodiment can achieve economical, safe, and reliable communication by adding a power positive wire that is separately connected to the load of the functional module, using another low-voltage and low-power positive wire for the power supply module and the functional module which are grounded together.

In addition, an embodiment of the present invention also provides a storage medium on which a multi-master power supply communication program, where the multi-master power supply communication program implements the steps of the multi-master power supply communication method as described above when executed by the processor. Therefore, detailed description will not be repeated here. In addition, the description of the beneficial effects of adopting the same method will not be repeated, either. For the technical details not disclosed in the embodiments of computer-readable storage media involved in this application, please refer to the description of the embodiments of the method in this application. As an example, program instructions can be deployed to be executed on a computing device, or on multiple computing devices located in one location, or on multiple computing devices distributed across multiple locations and interconnected through communication networks.

## Claims

1. A multi-master power supply communication system, comprising a power supply module and at least one functional module, wherein the power supply module and the at least one functional module are interconnected through a bus, wherein
the power supply module sends charging data to the functional module through the bus, and the functional module receives the charging data through the bus and executes a charging action;
the power supply module executes a first sending action through the bus and sends communication data to the at least one functional module; and the functional module executes a second sending action through the bus and sends communication data to the power supply module or another functional module.

2. The multi-master power supply communication system of claim 1, wherein the power supply module comprises a power supply main control unit, a charging unit, a power supply unit, a power supplementing unit, and a first power switch, wherein
the charging unit is configured to transmit first charging data to the bus;
the power supply main control unit is configured to control the power supply unit and the power supplementing unit each to send charging data to the bus; and
the first power switch is connected to the power supply unit and the power supplementing unit for transmitting second charging data and third charging data to the bus.

3. The multi-master power supply communication system of claim 2, wherein the power supply module further comprises a first sending module and a first receiving module, wherein
the first sending module comprises a first sending unit and a first bit data encoder, the first bit data encoder is configured to encode a logic data bit and a charging data bit into communication data, and the first sending unit is configured to send the communication data to the first power switch, so that the first power switch sends the communication data to the bus; and
the first receiving module comprises a first receiving unit and a first bit data decoder, the first receiving unit is configured to receive the communication data on the bus, and the first bit data decoder is configured to decode the communication data into the logic data bit and the charging data bit.

4. The multi-master power supply communication system of claim 3, wherein the functional module comprises a functional main control unit, a second sending module, a second receiving module, and a second power switch, wherein
the functional main control unit is configured to control the second sending module to execute a sending action and control the second receiving module to execute a receiving action;
the second sending module comprises a second sending unit and a second bit data encoder, the second bit data encoder is configured to encode a logic data bit and a charging data bit into communication data, and the second sending unit is configured to send the communication data to the second power switch, so that the second power switch sends the communication data to the bus; and
the second receiving module comprises a second receiving unit and a second bit data decoder, the second receiving unit is configured to receive the communication data on the bus, and the second bit data decoder is configured to decode the communication data into the logic data bit and the charging data bit.

5. The multi-master power supply communication system of claim 4, wherein the functional module further comprises a power supply branch and an energy storage capacitor, wherein
the power supply branch is configured to receive the charging data and charge the energy storage capacitor; and
the energy storage capacitor is connected to the power supply branch and stores electric energy corresponding to the charging data received by the power supply branch.

6. A multi-master power supply communication method for the power supply module of the multi-master power supply communication system of claim 5, comprising the following steps:
sending the charging data to the bus to charge the at least one functional module when the power supply module is detected to be powered on or the bus is detected to have no communication data; and
sending the charging data to the bus in a preset period of communication data transmission to charge the functional module if the communication data are detected to be transmitted by the bus.

7. The multi-master power supply communication method of claim 6, wherein the communication data comprises at least one logic data bit, the charging data comprises at least one charging data bit, and the preset period is after each logic data bit; and the step of sending the charging data to the bus in a preset period of communication data transmission to charge the functional module specifically comprises:
sending the charging data to the bus to charge the functional module after each logic data bit of the communication data, so that when the functional module receives the charging data, the second power switch is turned on to increase an output current of the functional module.

8. A multi-master power supply communication method for the power supply module or functional module of the multi-master power supply communication system of claim 5, comprising the following steps:
sending first communication data corresponding to a first communication sending instruction to the bus when the first communication sending instruction is received;
determining whether a priority corresponding to second communication data is higher than a priority of the first communication data if the second communication data are detected to be transmitted by the bus;
executing a sending waiting action until second communication data transmission is completed, and returning to execute the step of sending first communication data corresponding to a first communication sending instruction to the bus if the priority corresponding to the second communication data is higher than the priority of the first communication data; and
determining whether the second communication data transmission is completed, releasing the bus if the second communication data transmission is completed, and sending a response request to the functional module corresponding to the second communication data received if no contention is detected, so that the functional module sends response data to the bus according to the response request.

9. The multi-master power supply communication method of claim 8, further comprising:
executing a reception stop action if a second communication sending instruction is detected when third communication data transmitted by the bus is received; and
acquiring fourth communication data corresponding to the second communication sending instruction, and transmitting the fourth communication data to the bus.

10. A multi-master power supply communication device, comprising:
a power supply module comprising a memory, a processor, and a multi-master power supply communication program stored on the memory and operable on the processor, wherein the multi-master power supply communication program implements the steps of the multi-master power supply communication method of any one of claim 6 or 7 when executed by the processor; and
a functional module comprising a memory, a processor, and a multi-master power supply communication program stored on the memory and operable on the processor, wherein the multi-master power supply communication program implements the steps of the multi-master power supply communication method of any one of claim 8 or 9 when executed by the processor.
